(19) **Europäisches Patentamt**
**European Patent Office**
**Office européen des brevets**

(11) **EP 4 527 814 A1**

(12) **EUROPÄISCHE PATENTANMELDUNG**

(43) Veröffentlichungstag:
26.03.2025 Patentblatt 2025/13

(21) Anmeldenummer: 24192423.2

(22) Anmeldetag: 01.08.2024

(51) Internationale Patentklassifikation (IPC):
*C04B 18/02* (2006.01)   *C04B 20/00* (2006.01)
*C04B 20/10* (2006.01)   *C04B 28/02* (2006.01)
*C04B 28/14* (2006.01)   *C04B 38/00* (2006.01)
*C04B 111/28* (2006.01)

(52) Gemeinsame Patentklassifikation (CPC):
(C-Sets verfügbar)
**C04B 28/02; C04B 18/027; C04B 20/004;**
**C04B 20/1051; C04B 28/14; C04B 38/0038;**
C04B 2111/28                    (Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: 09.08.2023   DE 102023207657

(71) Anmelder: **Xella Baustoffe GmbH**
**47259 Duisburg (DE)**

(72) Erfinder:
• **Böhm, Pamela**
**47259 Duisburg (DE)**
• **Anders, Nicole**
**47259 Duisburg (DE)**

(74) Vertreter: **Dr. Solf & Zapf**
**Patent- und Rechtsanwalts PartG mbB**
**Candidplatz 15**
**81543 München (DE)**

(54) **GEBUNDENE DÄMMSTOFFSCHÜTTUNG UND DEREN VERWENDUNG SOWIE VERFAHREN ZUR HERSTELLUNG EINER VERFESTIGTEN DÄMMSTOFFSCHÜTTUNG**

(57) Die vorliegende Erfindung betrifft eine gebundene Dämmstoffschüttung und deren Verwendung sowie ein Verfahren zur Herstellung einer verfestigten Dämmstoffschüttung.

EP 4 527 814 A1

(52) Gemeinsame Patentklassifikation (CPC): (Forts.)

C-Sets
**C04B 18/027, C04B 18/16, C04B 18/021;
C04B 20/004, C04B 18/16;
C04B 20/1051, C04B 14/043;
C04B 20/1051, C04B 18/16;
C04B 28/02, C04B 18/16;
C04B 28/02, C04B 20/004;
C04B 28/14, C04B 7/02, C04B 18/16;
C04B 38/0038, C04B 7/02, C04B 28/14,
C04B 38/08;
C04B 38/0038, C04B 28/02, C04B 38/08**

**Beschreibung**

Die vorliegende Erfindung betrifft eine gebundene Dämmstoffschüttung und deren Verwendung sowie ein Verfahren zur Herstellung einer verfestigten Dämmstoffschüttung.

Bei Schüttungen handelt es sich um Materialgemische mit einem hohen Anteil an Granulatkörnern. Dämmschüttungen oder Dämmstoffschüttungen weisen mindestens ein Dämmstoffgranulat auf und werden sowohl als Wärmedämmung als auch als Schalldämmung eingesetzt. Außerdem gleichen Schüttungen im eingebrachten Zustand Unebenheiten aus und werden oftmals auch aus diesem Grund verwendet (Ausgleichsschüttungen). Bei dem Dämmstoffgranulat handelt es sich beispielsweise um Blähton-, Blähglas-, Blähschiefer-, Porenbeton- oder Perlitgranulat.

Bei Schüttungen unterscheidet man zudem zwischen losen und gebundenen Schüttungen.

Lose Schüttungen werden auf den jeweiligen Untergrund aufgebracht und lediglich gegebenenfalls etwas verdichtet. Die einzelnen Granulatkörner des Granulats sind nicht miteinander verbunden.

Eine gebundene Schüttung weist zumindest ein, z.B. mineralisches, hydraulisches, Bindemittel auf. Das hydraulische Bindemittel weist vorzugsweise Portlandzement auf. Die Schüttung wird dann mit Wasser zu einer Schüttungsfrischmasse angemischt, auf den jeweiligen Untergrund aufgebracht, gegebenenfalls verdichtet und/oder abgezogen, und anschließend das Bindemittel aushärten gelassen. Dadurch werden die einzelnen Granulatkörner des Granulats miteinander verbunden und die Schüttung wird verfestigt. Da der Anteil an Bindemittel allerdings sehr gering ist, sind die Granulatkörner - im Gegensatz beispielsweise zu einem Leichtbetonformkörper - nicht in eine durchgehende Bindemittelmatrix eingebettet, sondern lediglich punktuell miteinander verbunden.

Porenbetongranulat besteht aus Porenbetonmaterial (früher Gasbetonmaterial). Porenbetonmaterial wiederum besteht aus hydrothermal gehärtetem, porosiertem Calciumsilikathydratmaterial. Es wird hergestellt aus einer wässrigen Mischung bzw. Frischbetonmasse, welche mindestens eine im Hydrothermalprozess reaktionsfähige CaO-Komponente und mindestens eine im Hydrothermalprozess reaktionsfähige $SiO_2$-Komponente, ein Treibmittel, insbesondere Aluminiumpulver und/oder -paste, sowie gegebenenfalls, insbesondere inerte, Zusatzstoffe enthält. Außerdem enthält die Frischbetonmasse häufig mindestens ein Zusatzmittel, z.B. ein Fließmittel und/oder ein Dispergiermittel. Die gießfähige bzw. gießfertige Frischbetonmasse wird in eine Gießform gegossen, auftreiben und ansteifen gelassen, geschnitten und anschließend einer Dampfhärtung unterzogen. Im Gegensatz zu herkömmlichem, nicht autoklaviertem Beton weist Porenbetonmaterial keine groben Zuschlagkörner mit einer Korngröße > 2,0 mm auf.

Für die Herstellung von hydrothermal gehärtetem Schaumbetonmaterial wird der Frischbetonmasse anstelle des Treibmittels vorgefertigter Schaum untergemischt oder die einen Schaumbildner enthaltende Frischbetonmasse wird durch Rühren direkt aufgeschäumt und anschließend die gießfähige bzw. gießfertige Frischbetonmasse in die Gießform gegossen. Der Treibprozess entfällt jeweils.

Herkömmliches Poren- und Schaumbetonformmaterial besteht somit im Wesentlichen aus einem Feststoffsteggerüst, welches in der Regel hauptsächlich aus Calciumsilikathydratphasen (CSH-Phasen) besteht. Hauptsächlich meint, dass das Feststoffsteggerüst bezogen auf seine Trockenmasse zu über 50 M.-% aus den CSH-Phasen besteht. Das Feststoffsteggerüst kann zudem z.B. Restquarzkörner sowie gegebenenfalls die inerten Zusatzstoffe enthalten. Die Restquarzkörner und die inerten Zusatzstoffe sind in die CSH-Phasen eingebettet. Das Feststoffsteggerüst weist Stege auf, die die durch die Porosierung oder die Schaumzugabe oder das Aufschäumen künstlich erzeugten Poren (= Makroporen) umgeben. Außerdem weist das Feststoffsteggerüst Mikro-, Gel- und Nanoporen auf, die in die CSH-Phasen eingebettet sind bzw. in diesen verteilt sind. Die Nano-, Gel- und Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin bis kristallin, in der Regel handelt es sich hauptsächlich um 11 Å-Tobermorit sowie um CSH(I).

Gebundene Schüttungen können zusätzlich zu dem Dämmstoffgranulat und dem Bindemittel zudem mindestens einen weiteren Zuschlagstoff und/oder mindestens einen Zusatzstoff und/oder mindestens ein Zusatzmittel aufweisen.

Zusatzstoffe sind fein verteilte Stoffe, die bestimmte Eigenschaften der Schüttung beeinflussen. Sie beeinflussen vorrangig die Verarbeitbarkeit der Schüttungsfrischmasse. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zudem wird auch der Erstarrungsregler dem Bindemittelanteil zugerechnet.

Zusatzstoffe gehören zum Mehlkornanteil der Schüttung. Als Mehlkorn bzw. Mehl werden im Rahmen der Erfindung alle Körnungen bezeichnet, deren Korngröße $\leq 0{,}125$ mm beträgt. Ein Granulat weist im Rahmen der Erfindung zumindest auch Körner mit einer Korngröße > 0,125 mm auf.

Zuschlagstoffe sind ebenfalls inert und gröber als Zusatzstoffe. Sie bestehen somit nicht wie die Zusatzstoffe ausschließlich aus Mehlkorn, können aber einen Mehlkornanteil aufweisen.

Zuschlagstoffe werden unter anderem anhand ihrer Kornrohdichte eingeteilt und können natürlich, industriell hergestellt oder rezykliert sein. Grundsätzlich unterscheidet man anhand der Kornrohdichte $\rho_{Rg}$ zwischen Leichtzuschlag

(leichter Gesteinskörnung) ($\rho_{Rg}$ < 2000 kg/m$^3$), Normalzuschlag (normaler Gesteinskörnung) ($\rho_{Rg}$ = 2000-3000 kg/m$^3$) und Schwerzuschlag (schwerer Gesteinskörnung) ($\rho_{Rg}$ > 3000 kg/m$^3$). Im Rahmen der Erfindung wird der Begriff Dämmstoffgranulat synonym für einen Leichtzuschlagstoff verwendet.

Zusatzmittel werden der Schüttung zugesetzt, um durch chemische oder physikalische Wirkung oder durch beides die Eigenschaften der Schüttungsfrischmasse und/oder der erhärteten Schüttung - wie z.B. Verarbeitbarkeit, Erstarren, Erhärten oder Frostwiderstand - zu beeinflussen. Zusatzmittel werden flüssig, mehl- bzw. pulverförmig oder als Granulat geliefert.

Die DE 296 16 057 U1 offenbart ein Dämmschichtgranulat für einen Dachaufbau zum Ausgleich und als Isolierung aus einem Kunststoff-Hartschaum-Granulat und Kunstharzmörtelpulver. Die Mischung kann zudem u.a. 10-50 Vol.% Gasbetonbruchzuschläge enthalten. Das Kunstharzmörtelpulver weist zudem hydraulisches und latent hydraulisches Bindemittel sowie eine geringe Menge an Hydrophobierungsmittel auf. Der Kunstharzmörtel und das Kunststoff-Hartschaum-Granulat werden zudem in getrennten Säcken auf der Baustelle angeliefert und vor Ort unter Zugabe von Wasser gemischt.

Die DE 41 03 833 A1 offenbart die Verwendung einer Trockenmischung aus 10 bis 40 Gew.-% eines hydrophobierten, mineralischen Schüttgutes aus der Gruppe geblähte Perlite, Bims, Schaumglas, Lava, Blähton und/oder geblähtem Vermiculit mit einer Schüttdichte zwischen 60 und 250 kg/m$^3$ in einer Kornfraktion < 10 mm und 60 bis 90 Gew.-% eines Calciumsulfatträgers, insbesondere in Form von Stuckgips und/oder Alpha-Halbhydrat zur Herstellung einer Ausgleichsschicht (nach Aufsprühen von Wasser auf die zuvor ausgebrachte Trockenmischung) unter Estrichen, insbesondere Fließestrichen.

Die DE 199 48 394 C1 offenbart ein Verfahren zur Verfestigung von mineralischem, porösem Schüttgut, bei dem in einem ersten Schritt Schüttgut mit siliciumorganischem Imprägnierungsmittel (A) imprägniert wird. Das Imprägnierungsmittel (A) ist eine Lösung oder wässrige Emulsion von Verbindungen aus Einheiten der allgemeinen Formel (I)

$$R^1_a(OR^2)_b SiO_{\frac{4-a-b}{2}} \qquad (I),$$

worin
R$^1$ ein Wasserstoff oder einwertigen, gegebenenfalls mit Halogenatomen oder Aminogruppen substituierten C$_1$-C$_{12}$-Kohlenwasserstoffrest, R$^2$ Wasserstoffatom, Alkalimetallatom oder einwertigen gegebenenfalls mit Halogenatomen oder Aminogruppen substituierten C$_1$-C$_4$-Kohlenwasserstoffrest, a den Wert 0, 1, 2, 3 oder 4 und b den Wert 0, 1, 2, 3 oder 4 bedeuten, mit der Maßgabe, dass die Summe aus a und b grösser 0 und kleiner oder gleich 4 ist. In einem zweiten Schritt wird das imprägnierte Schüttgut mit einer wässrigen Organopolysiloxanbindemittel-Emulsion (B) versetzt, die als wirksamen Bestandteil Organosiloxanharze aus Einheiten der allgemeinen Formel (I) enthält, bei denen a einen Wert von 0,8 bis 1,8, und b einen Wert von 0 bis 0,5 aufweisen und die Summe von a + b maximal einen Wert von 1,9 hat. In einem dritten Schritt wird auf mindestens 50°C erhitzt. Das mineralische poröse Schüttgut wird in Baustoffformkörpern verwendet.

Aus der KR 1999-0001414 A geht ein Isoliermörtel für eine Bodenisolierungsschicht hervor, der auf < 1 mm zerkleinertes Porenbetonmaterial oder Porenbetonkörner mit einer Korngröße <5 mm aufweist.

Aufgabe der vorliegenden Erfindung ist die Bereitstellung einer mineralisch gebundenen, schüttfähigen Dämmstoffschüttung, die eine gute Lagerstabilität aufweist und die Herstellung einer erhärteten, verfestigten Dämmstoffschüttung mit guten Festigkeitseigenschaften gewährleistet.

Weitere Aufgaben sind die Bereitstellung eines Verfahrens zur Herstellung einer verfestigten Dämmstoffschüttung sowie eine Verwendung der Dämmstoffschüttung.

Diese Aufgaben werden durch eine Dämmstoffschüttung mit den Merkmalen von Anspruch 1, eines Verfahrens mit den Merkmalen von Anspruch 14 und eine Verwendung mit den Merkmalen von Anspruch 15 gelöst. Vorteilhafte Weiterbildungen der Erfindung sind in den sich jeweils anschließenden Unteransprüchen gekennzeichnet.

Die erfindungsgemäße gebundene, trockene, schüttfähige, unverfestigte Dämmstoffschüttung weist eine Dämmstoffkomponente aus zumindest einem, vorzugsweise oberflächlich, hydrophobierten Poren- und/oder Schaumbetongranulat sowie eine Bindemittelkomponente mit zumindest einem hydraulischen Bindemittel auf.

Für die Formulierung "zumindest bzw. mindestens eine(n)" im Rahmen dieser Anmeldung gilt Folgendes: Wenn zumindest bzw. mindestens eine Komponente enthalten sein kann, bedeutet dies, dass auch eine Mischung aus verschiedenen dieser Komponenten enthalten sein kann.

Vorzugsweise beträgt die Menge an Dämmstoffkomponente 60 bis 80 M.-%, bevorzugt 65 bis 70 M.-%, bezogen auf die Trockenmasse der Dämmstoffschüttung.

Die die Dämmstoffschüttung betreffenden Mengenangaben beziehen sich, falls nicht anders angegeben, immer auf die Trockenmasse der Dämmstoffschüttung, auch wenn dies nicht explizit erwähnt ist. Die Trockenmasse wird durch Trocknung auf Gewichtskonstanz bei 105°C mittels der gravimetrischen Methode (auch Darr-Wäge-Trocknung genannt) bestimmt. Hierbei wird der Wassergehalt der Materialprobe durch den Gewichtsverlust beim Trocknen ermittelt. Direkt nach der Entnahme wird Materialprobe luftdicht verpackt und gewogen. Die Probe wird anschließend in einem Trockenschrank so lange bei 105 °C getrocknet, bis sich bei aufeinanderfolgenden Wägungen die Gewichtskonstanz einstellt.

Zudem werden Korngrößen, falls nicht anders angegeben, immer durch Bestimmung des Siebdurchgangs gemäß DIN EN 1015-1:2007-05 ermittelt, auch wenn dies nicht explizit erwähnt ist.

Vorzugsweise weist die Dämmstoffkomponente eine Korngröße $\leq$ 12 mm, bevorzugt $\leq$ 10 mm, auf.

Außerdem handelt es sich vorzugsweise bei dem hydrophobierten Poren- oder Schaumbetongranulat jeweils um ein mechanisch zerkleinertes Granulat.

Es kann sich zudem auch um recycliertes Poren- oder Schaumbetongranulat handeln.

Des Weiteren weist die Dämmstoffkomponente vorzugsweise einen Siebdurchgang bei 8 mm von 85 bis 95 M.-% und/oder einen Siebdurchgang bei 3,15 mm von 45 bis 60 M.-% und/oder einen Siebdurchgang bei 0,5 mm von 1 bis 5 M.-% auf.

Vorzugsweise weist die Dämmstoffkomponente außerdem eine Schüttdichte von 400 bis 600 kg/m$^3$, bevorzugt 450 bis 550 kg/m$^3$, bestimmt gemäß DIN EN 1097-3:1998-06 auf.

Die oberflächliche Hydrophobierung des Poren- oder Schaumbetongranulats besteht zudem vorzugsweise aus Silikonharz. Sie wird erzeugt durch die Hydrophobierung des Poren- oder Schaumbetongranulats mit einem siliciumorganischen Hydrophobierungsmittel.

Siliciumorganische Hydrophobierungsmittel reagieren bekanntermaßen chemisch mit silikatischen Baustoffen und wachsen damit fest auf dem Baustoff auf. Sie führen zur Bildung eines beständigen, wasserabweisenden Silikonharzfilms, dessen Silikonharzmoleküle chemisch fest auf der Oberfläche des Baustoffs gebunden sind. Die hydrophoben organischen Reste R weisen von der Baustoffoberfläche weg.

Des Weiteren weisen die siliciumorganischen Hydrophobierungsmitteln in der Regel Silane, Siloxane, Silikonharze oder Silikonate oder Mischungen daraus auf.

Die Hydrophobierung mit siliciumorganischen Hydrophobierungsmittel bewirkt, dass kein Wasser mehr in den Baustoff eindringen kann. Die Wasserdampfdurchlässigkeit bleibt aber bestehen.

Durch eine oberflächliche Hydrophobierung bzw. Oberflächenhydrophobierung werden die Porenoberflächen der kapillarsaugenden Poren der Granulatkörner gegen das Eindringen von Feuchtigkeit imprägniert. Zudem werden die äußeren Kornoberflächen hydrophobiert. Bei der oberflächlichen Hydrophobierung gelangt das Hydrophobierungsmittel durch kapillares Saugen in die kapillarsaugenden Poren der Granulatkörner und es gelangt zudem an die äußere Kornoberfläche der Granulatkörner und reagiert zu dem, mit der jeweiligen Oberfläche verbundenen Silikonharzfilm.

Im Rahmen der Erfindung erfolgt die oberflächliche Hydrophobierung des Poren- oder Schaumbetongranulats vorzugsweise wie folgt:

Das Poren- oder Schaumbetongranulat wird mit einer wässrigen Emulsion eines siliciumorganischen Hydrophobierungsmittels mit Hilfe einer Drucksprühvorrichtung in einer Trommel besprüht und gemischt. Dabei gelangt das Hydrophobierungsmittel nicht nur an die äußeren Kornoberflächen der Granulatkörner, sondern, insbesondere durch kapillares Saugen, auch in die Poren, insbesondere die Kapillarporen, der Granulatkörner, also an die inneren Oberflächen bzw. Porenoberflächen der Granulatkörner. Die Granulatkörner werden also mit dem Hydrophobierungsmittel imprägniert. Es bildet sich also ein Silikonharzfilm auf den äußeren Kornoberflächen und den Porenoberflächen der Kapillarporen der Granulatkörner.

Vorzugsweise handelt es sich bei der Emulsion des siliciumorganischen Hydrophobierungsmittels um eine wässrige Emulsion eines Siloxans, bevorzugt eines Polydimethylsiloxans. Es kann sich aber auch um eine wässrige Emulsion eines Silans handeln.

Vorzugsweise weist die wässrige Emulsion einen Wirkstoffgehalt von 3 bis 8 M.-%, bevorzugt 4 bis 6 M.-%, auf.

Vorzugsweise beträgt der Wirkstoffgehalt zudem 0,3 bis 1,0 M.-%, bevorzugt 0,4 bis 0,8 M.-%, bezogen auf die Trockenmasse des nicht hydrophobierten Poren- oder Schaumbetongranulats.

Des Weiteren wird die Menge an Hydrophobierungsmittel vorzugsweise derart bemessen, dass das mit der Emulsion besprühte und gemischte Poren- oder Schaumbetongranulat eine Feuchte von 15 bis 25 M.-%, bevorzugt 18 bis 22 M.-%, aufweist, bestimmt durch Trocknung auf Gewichtskonstanz bei 105°C mittels der gravimetrischen Methode (auch Darr-Wäge-Trocknung genannt). Hierbei wird der Wassergehalt der Materialprobe durch den Gewichtsverlust beim Trocknen bestimmt. Direkt nach der Entnahme wird die Materialprobe luftdicht verpackt und gewogen. Die Probe wird anschließend in einem Trockenschrank so lange bei 105 °C getrocknet, bis sich bei aufeinanderfolgenden Wägungen die Gewichtskonstanz einstellt.

Das mit dem Hydrophobierungsmittel besprühte und gemischte Poren- oder Schaumbetongranulat wird anschließend lose in einer Halle als Haufwerk gelagert und anschließend als Sackware oder in ein Silo abgefüllt.

Vor der Verarbeitung wird das Hydrophobierungsmittel aushärten gelassen, so dass sich der oberflächliche Silikonharzfilm bildet. Die Aushärtezeit beträgt dabei unter Normalbedingungen mindestens 7 Tage, insbesondere mindestens 10 Tage, bevorzugt 14 Tage. Durch technische Maßnahmen wie Anwendung von erhöhten Temperaturen kann die Aushärtezeit verkürzt werden.

Die aus dem zumindest einen hydrophobierten Poren- und/oder Schaumbetongranulat bestehende Dämmstoffkomponente weist zudem vorzugsweise eine Wasserabgabe gemäß ASTM 303-77 von 180 bis 215 ml, bevorzugt 190 bis 210 ml auf.

Die Bindemittelkomponente weist vorzugsweise Portlandzementklinker und zumindest einen Erstarrungsregler auf. Bei dem zumindest einen Erstarrungsregler handelt es sich vorzugsweise um Gips oder Halbhydrat oder Anhydrit.

Insbesondere weist die Dämmstoffschüttung einen Portlandzement (CEM I) auf.

Werden Zemente gemäß DIN EN 197-1:2011-11 verwendet, die zusätzlich zum Portlandzement und dem Erstarrungsregler inerte Zusatzstoffe enthalten, werden diese Zusatzstoffe zu den inerten Zusatzstoffen gerechnet und nicht zum Bindemittelanteil. Und alle reaktiven Bestandteile des Zements werden der Bindemittelkomponente zugerechnet.

Der Anteil der Bindemittelkomponente, bezogen auf die Trockenmasse der Dämmstoffschüttung, beträgt vorzugsweise 20 bis 40 M.-%, bevorzugt 30 bis 35 M.-%.

Die Dämmstoffschüttung kann zudem mindestens einen inaktiven bzw. inerten Zusatzstoff, vorzugsweise natürliches Kalksteinmehl und/oder gefälltes Calciumcarbonat (PCC), aufweisen.

Die Dämmstoffschüttung weist zudem vorzugsweise zumindest ein Zusatzmittel auf. Vorzugsweise handelt es sich bei dem zumindest einen Zusatzmittel um einen Beschleuniger oder einen Verflüssiger oder ein Fließmittel.

Vorzugsweise weist die Dämmstoffschüttung 2 bis 7 M.-%, bevorzugt 3 bis 5 M.-%, Zusatzmittel auf.

Des Weiteren kann die Dämmstoffschüttung zusätzlich zu dem Poren- und/oder Schaumbetongranulat auch zumindest ein weiteres Dämmstoffgranulat aufweisen. Vorzugsweise liegt die Gesamtmenge an weiterem Dämmstoffgranulat aber bei 0 bis 5 M.-%, bevorzugt 0 bis 2 M.-%, bezogen auf die Trockenmasse der Dämmstoffmischung.

Die Dämmstoffschüttung weist zudem vorzugsweise keinen Normalzuschlagstoff und keinen schweren Zuschlagstoff auf.

Vorzugsweise besteht die Dämmstoffschüttung zu mindestens 85 M.-%, bevorzugt zu mindestens 95 M.-%, besonders bevorzugt zu mindestens 97 M.-% aus der Dämmstoffkomponente und der Bindemittelkomponente.

Außerdem weist die Dämmstoffschüttung vorzugsweise eine Biegezugfestigkeit nach 28 Tagen gemäß DIN EN 12089:2013-06 von mindestens 0,100 N/mm$^2$, bevorzugt 0,100 bis 0,150 N/mm$^2$ auf. Für die Prüfung der Biegezugfestigkeit gemäß DIN EN 12089:2013-06 werden im Rahmen der Erfindung Quader mit den Abmaßen (BxHxL) 40 x 40 x160 mm hergestellt. Die Schüttungsfrischmasse weist einen w/f-Wert von 0,27 auf.

Zudem weist die Dämmstoffschüttung vorzugsweise eine Druckfestigkeit nach 28 Tagen gemäß DIN EN 772-1:2016-05 von mindestens 0,200 N/mm$^2$, bevorzugt 0,200 bis 0,300 N/mm$^2$, auf. Für die Prüfung der Druckfestigkeit gemäß DIN EN 772-1:2016-05 werden im Rahmen der Erfindung Würfel mit 100 mm Kantenlänge hergestellt. Die Schüttungsfrischmasse weist einen w/f-Wert von 0,27 auf.

Und die Trockenrohdichte nach 28 Tagen gemäß DIN EN 772-13:2000-09 der Dämmstoffschüttung beträgt vorzugsweise 500 bis 700 kg/m$^3$, bevorzugt 550 bis 650 kg/m$^3$. Für die Prüfung der Trockenrohdichte gemäß DIN EN 772-13:2000-09 werden im Rahmen der Erfindung analog zur Druckfestigkeitsprüfung Würfel mit 100 mm Kantenlänge hergestellt. Die Schüttungsfrischmasse weist einen w/f-Wert von 0,27 auf.

Des Weiteren weist die Dämmstoffschüttung vorzugsweise nach 28 Tagen eine Wärmeleitfähigkeit $\lambda_{10,trocken}$ von 0,10 bis 0,16 W/m·K, bevorzugt 0,12 bis 0,14 W/m K, gemäß DIN EN 1745:2020 auf. Für die Prüfung der Wärmeleitfähigkeit $\lambda_{10,trocken}$ gemäß DIN EN 1745:2020 werden im Rahmen der Erfindung 250 x 250 mm große Platten mit einer Höhe von 40 mm hergestellt. Die Schüttungsfrischmasse weist einen w/f-Wert von 0,27 auf.

Des Weiteren liegt die Dämmstoffschüttung vor ihrer Verwendung zur Herstellung einer ausgehärteten Dämmstoffschüttung wie bereits erläutert in loser bzw. schüttfähiger bzw. nicht formstabiler Form vor.

Vorzugsweise sind die Komponenten der gebundenen, schüttfähigen Dämmstoffschüttung dabei in zwei verschiedenen Behältnissen abgepackt, die zusammen als eine Einheit an den jeweiligen Verwendungsort geliefert werden.

Insbesondere weist die Dämmstoffschüttung ein Dämmstoffgemenge auf, welches die Dämmstoffkomponente und gegebenenfalls vorhandene weitere Zuschlagstoffe, insbesondere weitere Dämmstoffgranulate, aufweist. Das Dämmstoffgemenge ist in einem ersten Behältnis angeordnet bzw. abgepackt, beispielsweise in einem Sack, BigBag oder einem Silo. Zudem weist die Dämmstoffschüttung ein Bindemittelgemenge mit den restlichen Bestandteilen der Dämmstoffschüttung, insbesondere der Bindemittelkomponente, gegebenenfalls den Zusatzstoffen und gegebenenfalls den Zusatzmitteln auf. Das Bindemittelgemenge ist in einem zweiten Behältnis angeordnet bzw. abgepackt, vorzugsweise einem Sack. Dies ist vorteilhaft, da das hydrophobierte Poren- oder Schaumbetongranulat in der Regel eine geringe Restfeuchte aufweist. Um zu verhindern, dass die Bindemittelkomponente mit der Restfeuchte reagiert, wird das hydrophobierte Poren- oder Schaumbetongranulat getrennt abgepackt. Zudem wird dadurch verhindert, dass sich die Bindemittelkomponente unten absetzt.

Am Verwendungsort wird die Dämmstoffschüttung dann in an sich bekannter Weise in einem Mischer, insbesondere einem Zwangsmischer, unter Zugabe von Anmachwasser gemischt und eine Schüttungsfrischmasse hergestellt.

Vorzugsweise weist die Schüttungsfrischmasse einen w/f-Wert von 0,20 bis 0,40 bevorzugt 0,22 bis 0,33 auf.

Die Schüttungsfrischmasse wird dann auf den jeweiligen Untergrund aufgebracht, vorzugsweise verdichtet und/oder abgezogen, und aushärten gelassen. Nach dem Aushärten liegt die Dämmstoffschüttung also in Form einer formstabilen Schicht bzw. Dämmstoffschüttungsschicht, vorzugsweise einer Ausgleichsschicht zum Ausgleichen von Unebenheiten des Untergrunds, vor.

Vorzugsweise wird die Dämmstoffschüttung zur Herstellung einer Dämmstoffschüttungsschicht eines Fußbodenaufbaus und/oder eines Dachaufbaus und/oder als Ausgleichsschüttung einer Installationsebene verwendet.

Im Rahmen der Erfindung liegt es dabei auch, dass das Poren- oder Schaumbetongranulat nicht oberflächenhydrophobiert, sondern massenhydrophobiert ist. Es wird dann hergestellt durch mechanische Zerkleinerung eines massenhydrophobierten Poren- oder Schaumbetonformkörpers. Bei der Massenhydrophobierung wird das jeweilige Hydrophobierungsmittel bei der Herstellung des Poren- oder Schaumbetonformkörpers der Frischmasse zugegeben. Als Hydrophobierungsmittel werden vorzugsweise ebenfalls die oben genannten Hydrophobierungsmittel verwendet. Auch die Massenhydrophobierung führt in an sich bekannter Weise zur Bildung eines Silikonharzfilms auf den inneren Porenoberflächen des hergestellten Baustoffs, insbesondere des Poren- oder Schaumbetonformkörpers. Dieser wird zur Herstellung des massenhydrophobierten Poren- oder Schaumbetongranulats dann mechanisch zerkleinert, insbesondere gebrochen.

Abschließend wird darauf hingewiesen, dass alle genannten, insbesondere beanspruchten, Merkmale der Dämmstoffschüttung und der Verfahren für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

Ausführungsbeispiel:

1. Herstellung und Eigenschaften des oberflächenhydrophobierten Porenbetongranulats

Tabelle 1: Rohstoffe oberflächenhydrophobiertes Porenbetongranulat

| Bezeichnung | Kurzbezeichnung | Hersteller |
|---|---|---|
| Porenbetongranulat | 0-10 mm | Xella Loosdorf |
| Hydrophobierungsmittel | SILRES BS 1042 | Wacker |

Tabelle 2: Daten Oberflächenhydrophobierung

| | |
|---|---|
| Menge Hydrophobierungsmittel [M.-%] | 0,8 |
| Menge Wasser [l/m³ Granulat] | 200 |
| Feuchte Porenbetongranulat nach Hydrophobierung [M.%] | 20,09 |
| Wasserabgabe nach ASTM 303-77 [ml] | 210 |

Tabelle 3: Kornverteilung oberflächenhydrophobiertes Porenbetongranulat

| Siebgröße | Siebdurchgang [M.-%] |
|---|---|
| 10 mm | 100,0 |
| 8 mm | 91,7 |
| 5 mm | 68,5 |
| 4 mm | 59,7 |
| 3,15 mm | 52,2 |
| 2 mm | 37,6 |
| 1 mm | 10,9 |
| 0,5 mm | 3,0 |
| 0,125 mm | 1,0 |

(fortgesetzt)

| Siebgröße | Siebdurchgang [M.-%] |
|---|---|
| **0,09** | 0,8 |

Die oberflächliche Hydrophobierung des Porenbetongranulats 0-10 mm erfolgte wie folgt: Zunächst wurde das Hydrophobierungsmittel mit dem Wasser gemischt. Das zu hydrophobierende Porenbetongranulat wurde produktionsfeucht für die Hydrophobierung verwendet und mit der wässrigen Emulsion des Hydrophobierungsmittels in einer Trommel besprüht und gemischt. Das mit dem Hydrophobierungsmittel besprühte und gemischte Porenbetongranulat wurde anschließend lose und ohne weitere aktive Trocknung, gelagert und das Hydrophobierungsmittel für 7 Tage aushärten gelassen, anschließend erfolgte die Prüfung zur Wasseraufnahme.

## 2. Herstellung und Eigenschaften der Dämmstoffschüttung

**Tabelle 4: Zusammensetzung der Dämmstoffschüttung**

| Rohstoff | Mischungsverhältnis |
|---|---|
| **Oberflächenhydrophobiertes Porenbetongranulat** | 3,75 kg (7,8l) |
| **Bindemittel ThermowhiteCompound, Thermowhite GmbH** | 1 kg |
| **Wasser** | 1,3 l |

Zudem wurden 3,75 kg (7,8 l) oberflächenhydrophobiertes Granulat mit 1 kg Bindemittel mit Hilfe eines Mörtelmischers trocken vorgemischt und anschließend mit 1,3 Liter Wasser zu einer homogenen Schüttungsfrischmasse verarbeitet. Aus dieser Schüttungsfrischmasse wurden je nach Norm Prüfkörper unterschiedlicher Geometrie mit Hilfe von Formen hergestellt. Es wurden Würfel mit 100 mm Kantenlänge für die Druckfestigkeitsprüfung, Biegezugprüfkörper mit den Abmaßen (BxHxL) 40 x 40 x160 mm sowie 250 x 250 mm große Platten mit einer Höhe von 40 mm für die Bestimmung der Wärmeleitfähigkeit hergestellt. Die Prüfungen erfolgten jeweils nach 28 Tagen.

**Tabelle 5: Eigenschaften der ausgehärteten Dämmstoffschüttung**

| | |
|---|---|
| **Druckfestigkeit gemäß DIN EN 772-1:2016-05 [N/mm$^2$]** | 0,280 |
| **Biegezugfestigkeit gemäß DIN EN 12089:2013-06** | 0,100 |
| **Wärmeleitfähigkeit $\lambda_{10,trocken}$ gemäß DIN EN 1745:2020 [W/m·K]** | 0,1211 |
| **Trockenrohdichte gemäß DIN EN 772-13:2000-09 [kg/m$^3$]** | 613 |

## Patentansprüche

1. Gebundene, schüttfähige Dämmstoffschüttung aufweisend

   a) eine Dämmstoffkomponente aus zumindest einem hydrophobierten Poren- und/oder Schaumbetongranulat, vorzugsweise in einer Menge von 60 bis 80 M.-%, bevorzugt 65 bis 70 M.-%,
   b) eine Bindemittelkomponente mit zumindest einem mineralischen, bevorzugt hydraulischen, Bindemittel, vorzugsweise in einer Menge von 20 bis 40 M.-%, bevorzugt 30 bis 35 M.-%,
   c) vorzugsweise zumindest ein Zusatzmittel, vorzugsweise in einer Gesamtmenge an Zusatzmittel von 2 bis 7 M.-%, bevorzugt 3 bis 5 M.-%.

2. Dämmstoffschüttung nach Anspruch 1,
   **dadurch gekennzeichnet, dass**
   das zumindest eine Poren- oder Schaumbetongranulat aus Granulatkörnern besteht und die Granulatkörner eine oberflächliche Hydrophobierung aus Silikonharz aufweisen.

3. Dämmstoffschüttung nach Anspruch 1 oder 2,

**dadurch gekennzeichnet, dass**
das zumindest eine Poren- oder Schaumbetongranulat aus Granulatkörnern besteht und die Granulatkörner massenhydrophobiert sind.

4.  Dämmstoffschüttung nach einem der vorhergehenden Ansprüche,
    **dadurch gekennzeichnet, dass**
    die Dämmstoffkomponente eine Korngröße $\leq$ 12 mm, bevorzugt $\leq$ 10 mm, aufweist.

5.  Dämmstoffschüttung nach einem der vorhergehenden Ansprüche,
    **dadurch gekennzeichnet, dass**
    die Dämmstoffkomponente einen Siebdurchgang bei 8 mm von 85 bis 95 M.-% und/oder einen Siebdurchgang bei 3,15 mm von 45 bis 60 M.-% und/oder einen Siebdurchgang bei 0,5 mm von 1 bis 5 M.-% aufweist.

6.  Dämmstoffschüttung nach einem der vorhergehenden Ansprüche,
    **dadurch gekennzeichnet, dass**
    die Dämmstoffkomponente eine Schüttdichte von 400 bis 600 kg/m$^3$, bevorzugt 450 bis 550 kg/m$^3$, bestimmt gemäß DIN EN 1097-3:1998-06 aufweist.

7.  Dämmstoffschüttung nach einem der vorhergehenden Ansprüche,
    **dadurch gekennzeichnet, dass**
    die Dämmstoffkomponente eine Wasserabgabe gemäß ASTM 303-77 von 180 bis 215 ml, bevorzugt 190 bis 210 ml, aufweist.

8.  Dämmstoffschüttung nach einem der vorhergehenden Ansprüche,
    **dadurch gekennzeichnet, dass**
    die Bindemittelkomponente Portlandzementklinker und zumindest einen Erstarrungsregler aufweist, wobei es sich bei dem zumindest einen Erstarrungsregler vorzugsweise um Gips oder Halbhydrat oder Anhydrit handelt.

9.  Dämmstoffschüttung nach einem der vorhergehenden Ansprüche,
    **dadurch gekennzeichnet, dass**
    die Dämmstoffschüttung zu mindestens 85 M.-%, bevorzugt zu mindestens 95 M.-%, besonders bevorzugt zu mindestens 97 M.-%, aus der Dämmstoffkomponente und der Bindemittelkomponente besteht.

10. Dämmstoffschüttung nach einem der vorhergehenden Ansprüche,
    **dadurch gekennzeichnet, dass**
    die Dämmstoffschüttung eine Biegezugfestigkeit nach 28 Tagen gemäß DIN EN 12089 2013-06 von mindestens 0,100 N/mm$^2$, vorzugsweise von 0,100 bis 0,150 N/mm$^2$, aufweist.

11. Dämmstoffschüttung nach einem der vorhergehenden Ansprüche,
    **dadurch gekennzeichnet, dass**
    die Dämmstoffschüttung eine Druckfestigkeit nach 28 Tagen gemäß DIN EN 772-1:2016-05 von mindestens 0,200 N/mm$^2$, bevorzugt 0,200 bis 0,300 N/mm$^2$, aufweist.

12. Dämmstoffschüttung nach einem der vorhergehenden Ansprüche,
    **dadurch gekennzeichnet, dass**
    die Dämmstoffschüttung eine Trockenrohdichte nach 28 Tagen gemäß DIN EN 772-13:2000-09 von 500 bis 700 kg/m$^3$, bevorzugt 550 bis 650 kg/m$^3$, aufweist.

13. Dämmstoffschüttung nach einem der vorhergehenden Ansprüche,
    **dadurch gekennzeichnet, dass**
    die Dämmstoffschüttung nach 28 Tagen eine Wärmeleitfähigkeit $\lambda_{10,trocken}$ gemäß DIN EN 1745:2020 von 0,10 bis 0,16 W/m·K, bevorzugt 0,12 bis 0,14 W/m·K, aufweist.

14. Verfahren zur Herstellung einer verfestigten gebundenen, formstabilen Dämmstoffschüttung, insbesondere in Form einer formstabilen Dämmstoffschüttungsschicht,
    **gekennzeichnet durch**
    folgende Verfahrensschritte:

a) Herstellung einer Schüttungsfrischmasse aufweisend eine Dämmstoffschüttung gemäß einem der Ansprüche 1 bis 13 und Anmachwasser,
b) Einbringen der Schüttungsfrischmasse auf einen Untergrund,
c) Erhärten lassen der Schüttungsfrischmasse.

15. Verwendung einer Dämmstoffschüttung gemäß einem der Ansprüche 1 bis 13 zur Herstellung einer verfestigten gebundenen, formstabilen Dämmstoffschüttung, insbesondere in Form einer Dämmstoffschüttungsschicht.

Europäisches
Patentamt

European
Patent Office

Office européen
des brevets

## EUROPÄISCHER RECHERCHENBERICHT

**Nummer der Anmeldung**

EP 24 19 2423

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/102116 A1 (FERMACELL GMBH [DE]) 30. Juni 2016 (2016-06-30) | 1-4,6, 8-15 | INV. C04B18/02 |
| A | * Seite 2, Zeile 27 - Seite 3, Zeile 4 * | 5,7 | C04B20/00 |
| | * Seite 4, Zeile 24 - Zeile 31 * | | C04B20/10 |
| | * Seite 6, Zeile 17 - Seite 7, Zeile 3 * | | C04B28/02 |
| | * Seite 8, Zeile 26 - Seite 9, Zeile 2 * | | C04B28/14 |
| | * Ansprüche 1-18 * | | C04B38/00 |
| | ----- | | |
| A | WO 2012/087776 A1 (UNITED STATES GYPSUM CO [US]; DUBEY ASHISH [US]; CHAN CESAR [US]) 28. Juni 2012 (2012-06-28) * Ansprüche 1-10 * | 1,14,15 | ADD. C04B111/28 |
| | ----- | | |
| A | DE 10 2011 102649 A1 (REFRATECHNIK HOLDING GMBH [DE]) 29. November 2012 (2012-11-29) * Absatz [0059] * * Ansprüche 1,2,7,17,18 * | 1,14,15 | |
| | ----- | | |
| A | WO 2020/193554 A1 (BASF SE [DE]) 1. Oktober 2020 (2020-10-01) * Seite 6, Zeile 38 - Zeile 40 * * Seite 7, Zeile 31 - Seite 8, Zeile 34 * * Ansprüche 1,2,12 * | 1,14,15 | |
| | ----- | | **RECHERCHIERTE SACHGEBIETE (IPC)** |
| A | WO 2020/011354 A1 (WACKER CHEMIE AG [DE]) 16. Januar 2020 (2020-01-16) * Ansprüche 1,2 * | 1,14,15 | C04B |
| | ----- | | |
| A | DE 44 43 594 A1 (BAYOSAN WACHTER GMBH & CO KG [DE]) 13. Juni 1996 (1996-06-13) * Ansprüche 1-8 * | 1,14,15 | |
| | ----- | | |
| A,D | DE 296 16 057 U1 (WEDI HELMUT [DE]) 16. Januar 1997 (1997-01-16) * Ansprüche 1,7 * | 1,14,15 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 11. Februar 2025 | Kolb, Ulrike |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 .....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 19 2423

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2025

| Im Recherchenbericht angeführtes Patentdokument | Datum der Veröffentlichung | Mitglied(er) der Patentfamilie | Datum der Veröffentlichung |
|---|---|---|---|
| WO 2016102116 A1 | 30-06-2016 | DE 102014019352 B3 | 19-05-2016 |
| | | DK 3245175 T3 | 06-05-2019 |
| | | EP 3245175 A1 | 22-11-2017 |
| | | ES 2719149 T3 | 08-07-2019 |
| | | PL 3245175 T3 | 29-11-2019 |
| | | TR 201905440 T4 | 21-05-2019 |
| | | WO 2016102116 A1 | 30-06-2016 |
| WO 2012087776 A1 | 28-06-2012 | AR 084547 A1 | 22-05-2013 |
| | | AU 2011349661 A1 | 02-05-2013 |
| | | BR 112013014175 A2 | 29-11-2016 |
| | | CA 2822315 A1 | 28-06-2012 |
| | | CN 103261539 A | 21-08-2013 |
| | | EP 2655755 A1 | 30-10-2013 |
| | | JP 6227723 B2 | 08-11-2017 |
| | | JP 2017007936 A | 12-01-2017 |
| | | KR 20140018215 A | 12-02-2014 |
| | | MY 166517 A | 05-07-2018 |
| | | RU 2013133416 A | 27-01-2015 |
| | | US 8038790 B1 | 18-10-2011 |
| | | WO 2012087776 A1 | 28-06-2012 |
| DE 102011102649 A1 | 29-11-2012 | DE 102011102649 A1 | 29-11-2012 |
| | | EP 2580171 A1 | 17-04-2013 |
| | | ES 2530000 T3 | 25-02-2015 |
| | | PL 2580171 T3 | 29-05-2015 |
| | | RU 2013112357 A | 27-09-2014 |
| | | UA 105435 C2 | 12-05-2014 |
| | | WO 2012163555 A1 | 06-12-2012 |
| WO 2020193554 A1 | 01-10-2020 | CN 113613777 A | 05-11-2021 |
| | | EP 3946719 A1 | 09-02-2022 |
| | | JP 2022530184 A | 28-06-2022 |
| | | KR 20210142173 A | 24-11-2021 |
| | | US 2022185682 A1 | 16-06-2022 |
| | | WO 2020193554 A1 | 01-10-2020 |
| WO 2020011354 A1 | 16-01-2020 | KEINE | |
| DE 4443594 A1 | 13-06-1996 | DE 4443594 A1 | 13-06-1996 |
| | | EP 0716055 A1 | 12-06-1996 |
| DE 29616057 U1 | 16-01-1997 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 29616057 U1
- DE 4103833 A1
- DE 19948394 C1
- KR 19990001414 A